## Europäisches Patentamt

## European Patent Office

## Office européen des brevets

(19)

(11) Numéro de publication: **0 122 192**
A1

(12)

# DEMANDE DE BREVET EUROPEEN

(21) Numéro de dépôt: **84400659.3**

(22) Date de dépôt: **03.04.84**

(51) Int. Cl.³: **H 04 Q 3/52,** H 04 B 9/00, G 03 H 1/24

(30) Priorité: **06.04.83 FR 8305605**

(43) Date de publication de la demande: **17.10.84**
**Bulletin 84/42**

(84) Etats contractants désignés: **BE DE GB NL**

(71) Demandeur: **THOMSON-CSF, 173, Boulevard Haussmann, F-75379 Paris Cedex 08 (FR)**

(72) Inventeur: **Huignard, Jean-Pierre, THOMSON-CSF SCPI 173, bld Haussmann, F-75379 Paris Cedex 08 (FR)**
Inventeur: **Herriau, Jean-Pierre, THOMSON-CSF SCPI 173, bld Haussmann, F-75379 Paris Cedex 08 (FR)**
Inventeur: **Delboulbe, Anne, THOMSON-CSF SCPI 173, bld Haussmann, F-75379 Paris Cedex 08 (FR)**
Inventeur: **Fiorese, Serge, THOMSON-CSF SCPI 173, bld Haussmann, F-75379 Paris Cedex 08 (FR)**
Inventeur: **Rey, Alain, THOMSON-CSF SCPI 173, bld Haussmann, F-75379 Paris Cedex 08 (FR)**

(74) Mandataire: **El Manouni, Josiane et al, THOMSON-CSF SCPI 173, Bld Haussmann, F-75379 Paris Cedex 08 (FR)**

(54) **Dispositif de commutation spatiale de faisceaux optiques.**

(57) L'invention concerne des commutateurs permettant de relier par voie optique au moins l'un des circuits d'un ensemble de circuits d'entrée à au moins un circuit d'un ensemble de circuits de sortie.

Elle consiste à éclairer avec des faisceaux d'entrée parallèles, issus d'un ensemble de circuits d'entrée (1), un milieu photosensible (3). Les faisceaux d'entrée se diffractent alors sur des strates inscrites dans un milieu photosensible (3) pour aller atteindre l'un des circuits d'un ensemble de circuits photorécepteurs (4). Ces strates sont inscrites dans ce milieu (3) par interférences de deux faisceaux d'inscription; ces faisceaux étant émis successivement dans deux longueurs d'onde différentes $\lambda_1$, $\lambda_2$. La longueur d'onde $\lambda_\ell$ des faisceaux d'entrée n'est pas située dans le domaine de sensibilité spectrale du milieu photosensible (3) et est tel que

$$\frac{1}{\lambda_\ell} = \frac{m}{\lambda_1} \pm \frac{n}{\lambda_2};\ m\ \text{et}\ n\ \text{étant deux nombres entiers.}$$

L'invention permet de réaliser des commutateurs électro-optiques utilisables notamment dans les centraux téléphoniques automatiques.

# DISPOSITIF DE COMMUTATION SPATIALE DE FAISCEAUX OPTIQUES.

La présente invention se rapporte aux dispositifs de commutation électro-optiques qui permettent de relier des organes photoémetteurs d'entrée à des organes photorécepteurs de sortie par des liaisons optiques modifiables sous l'action de signaux de commande électriques extérieurs. L'application de ces dispositifs à la commutation téléphonique permet d'obtenir un central téléphonique dans lequel la mise en relation des lignes d'abonnés s'effectue sans contact électrique mobile. Le domaine considéré est donc celui des techniques de commutation spatiale de faisceaux issus, par exemple, de fibres optiques monomodes ou multimodes.

Un dispositif de l'art connu décrit dans la demande de brevet français déposée le 18 décembre 1981 sous le N° 81 23729 concerne les commutateurs permettant de relier par voie optique au moins l'un des circuits d'un ensemble de circuits photoémetteurs à au moins un circuit d'un ensemble de circuits photodétecteurs, comprenant des moyens de génération de deux faisceaux lumineux d'inscription, ces moyens de génération consistant en deux sources lumineuses et des moyens de déflexion du rayonnement émis par le circuit photoémetteur rendu préalablement parallèle par des moyens de collimation. Ces moyens de déflexion permettent de diriger le rayonnement sur la partie active du circuit photorécepteur correspondant. Ils consistent en un réseau de diffraction inscrit dans un milieu photosensible obtenu par l'interférence de ces deux faisceaux lumineux d'inscription qui créent le réseau de diffraction dans le milieu photosensible, ces faisceaux d'inscription ont une longueur d'onde différente de celle des faisceaux issus des circuits photoémetteurs, la longueur d'onde du rayonnement émis par le circuit photoémetteur n'étant pas située dans le domaine de sensibilité spectrale du milieu photosensible. Ce milieu photosensible, dans lequel le réseau de diffraction est un réseau tridimensionnel de strates, est continûment recyclable.

Les deux faisceaux lumineux d'inscription sont des faisceaux d'onde plane éclairant, tous deux, uniformément le milieu photosensible qui comprend un modulateur spatial bidimensionnel positionné sur le parcours de ces faisceaux d'inscription entre les sources lumineuses et le milieu photosensible. Ce modulateur permet de sélectionner des zones limitées dans lesquelles des réseaux de diffraction sont inscrits.

L'inconvénient de ce dispositif de l'art antérieur réside dans la nécessité de déterminer par calcul la position des deux sources d'enregistrement $S_n$ et $S_{n+1}$. Ces deux sources, en effet doivent générer les deux ondes qui interfèrent et créent dans le volume du matériau photosensible un système de strates d'interférence tel que le faisceau issu de fibres optiques émettrices soit diffracté sous incidence Bragg. Ces sources peuvent être, par exemple, générées par la déflexion de faisceaux incidents issus d'une même source après traversée d'un séparateur de faisceau, à l'aide de dispositifs par exemple optomécaniques.

Le dispositif de l'invention permet de pallier cet inconvénient ; en effet il ne nécessite aucun faisceau mobile. Le faisceau diffracté est restitué rigoureusement dans la direction des ondes ayant servies à l'inscription. Les directions de diffraction sont prédéterminées par la géométrie d'un réseau d'obturateurs. La commutation spatiale est obtenue par simple sélection de tensions $V_x$ et $V_y$ appliquées sur deux obturateurs. Enfin l'ensemble constitue une structure compacte utilisant un mimimun de composants optiques.

Ainsi l'invention concerne un dispositif de commutation spatiale de faisceaux lumineux issus par exemple de fibres optiques monomodes ou multimodes. Le dispositif présenté permet de relier toute fibre d'une matrice émettrice à l'un quelconque des éléments d'une matrice réceptrice constituée par un arrangement de $N^2$ photodétecteurs ou extrémités des fibres optiques. Le dispositif proposé trouve des applications importantes dans le domaine de la commutation par voie optique de signaux large bande.

L'invention a pour objet un dispositif de commutation de faisceaux optiques destiné à relier par voie optique au moins l'un des circuits d'un ensemble de circuits photoémetteurs à au moins un circuit d'un ensemble de circuits photorécepteurs, comprenant des moyens de génération de deux faisceaux lumineux d'inscription, des moyens de collimation et des moyens de déflexion des faisceaux émis par les circuits photoémetteurs rendus préalablement parallèles par ces moyens de collimation, un premier modulateur spatial bidimensionnel étant positionné sur le parcours de ces faisceaux d'inscription entre les moyens de génération de ces faisceaux et ces moyens de déflexion, ces moyens de déflexion consistant en un réseau de diffraction inscrit dans un milieu photosensible, ce réseau étant obtenu par l'interférence de ces deux faisceaux lumineux d'inscription de longueur d'onde différente de celle des faisceaux issus des circuits photoémetteurs, la longueur d'onde des faisceaux émis par les circuits photoémetteurs n'étant pas située dans le domaine de sensibilité spectrale du milieu photosensible, les deux faisceaux lumineux d'inscription étant des faisceaux d'onde plane éclairant, tous deux, uniformément ce milieu photosensible, caractérisé en ce que, les moyens de génération des faisceaux d'inscription délivrent des faisceaux d'inscription à deux longueurs d'onde et en ce qu'il comprend, conformément à une séquence préétablie, des moyens de commutation permettant d'émettre dans deux directions, qui restent les mêmes, les deux faisceaux d'inscription de manière à ce que ces faisceaux créent un premier réseau de diffraction dans ce milieu photosensible à une première longueur d'onde $\lambda_1$ et un second réseau de diffraction dans ce milieu photosensible à une deuxième longueur d'onde $\lambda_2$, la longueur d'onde $\lambda_\ell$ des faisceaux issus des circuits photoémetteurs étant une combinaison de ces deux longueurs d'onde et telle que $\frac{1}{\lambda_\ell} = \frac{m}{\lambda_1} + \frac{n}{\lambda_2}$ , m et n étant deux nombres entiers, un deuxième modulateur bidimensionnel étant positionné sur le parcours d'un des faisceaux lumineux d'inscription avant le premier modulateur, une lame semi-transparente dichroïque transparente aux longueurs d'ondes des faisceaux d'inscription interceptant tous les faisceaux issus de circuits photoémetteurs, réfléchissante pour la longueur d'onde de ces faisceaux issus des circuits photoémetteurs, étant disposée entre ces deux modulateurs, cette lame réfléchissant les faisceaux issus des circuits photoémetteurs vers les circuits photorécepteurs.

L'invention sera mieux comprise au moyen de la description qui suit et des figures annexées parmi lesquelles :

- les figures 1 et 2 illustrent un schéma partiel du dispositif suivant l'invention ;

- les figures 3 et 4 sont des schémas explicatifs du fonctionnement du dispositif suivant l'invention ;

- la figure 5 illustre un aspect particulier du dispositif selon l'invention ;

- la figure 6 est un schéma explicatif du fonctionnement du dispositif suivant l'invention ;

- les figures 7 et 8 illustrent deux aspects particuliers du dispositif selon l'invention ;

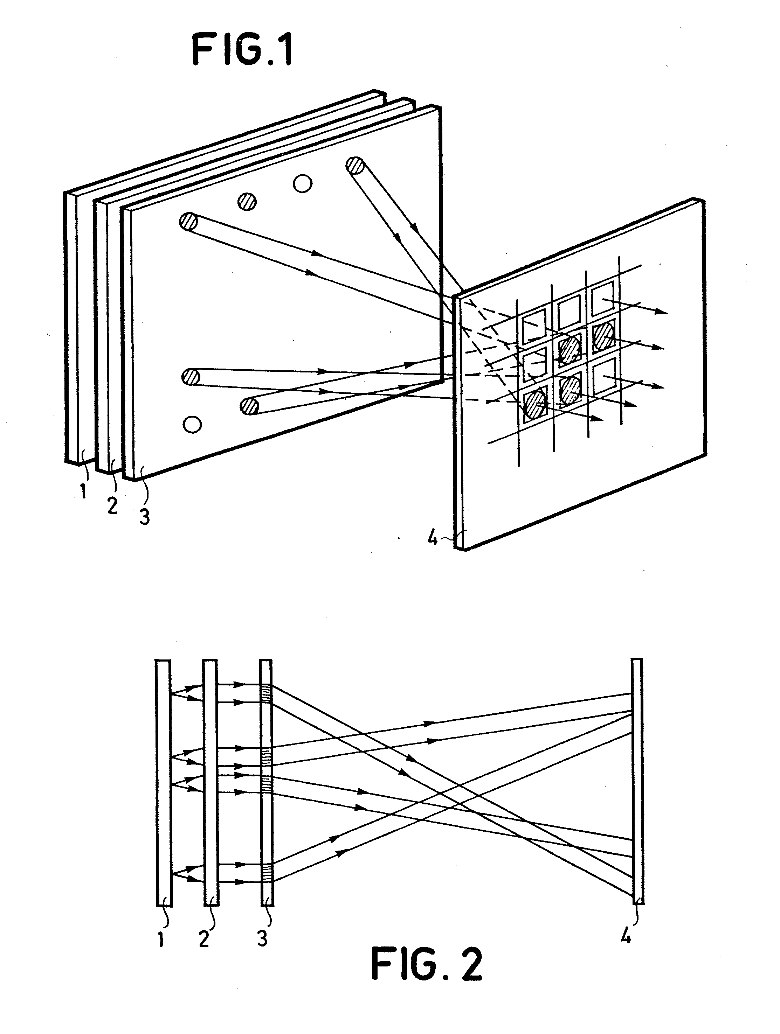

Les figures 1 et 2 illustrent différentes matrices de circuits. Les faisceaux lumineux issus de la matrice 1 des circuits photoémetteurs sont rendus parallèles par passage à travers une matrice de microlentilles 2. Ces faisceaux alors se diffractent sur des strates inscrites dans le milieu 3 pour atteindre différents circuits de la matrice 4 de circuits photorécepteurs. Ces strates, ayant été inscrites dans un milieu photosensible épais, sont donc des plans parallèles au plan bissecteur des surfaces d'ondes incidentes qui ont permis, par interférence, leur inscription dans ce milieu. Il y a aussi matérialisation d'une sortie de "store vénitien" fait de strates équidistantes. Ce milieu peut être un milieu photosensible électrooptique. C'est alors un milieu continûment recyclable. Ce peut être par exemple un milieu à haut rendement de type oxyde de bismuth-silicium (BSO).

La longueur d'onde des faisceaux provenant des circuits photoémetteurs n'est pas située dans le domaine de sensibilité spectrale du milieu, elle est située par exemple dans le domaine infra-rouge. Ainsi la matrice d'émission 1 est constituée d'un réseau de m x n sources lumineuses modulables, collimatées à l'aide d'un réseau 2 de microlentilles ou de fibres focalisantes de type à gradient d'indice par exemple. Les faisceaux ainsi générés sont placés en regard d'une plaquette 3 de matériau BSO servant de support à l'enregistrement de réseaux de strates de pas et d'orientation convenables. Ces réseaux sont inscriptibles et effaçables. La lecture du réseau n'étant pas destructrice aux longueurs d'onde considérées, le faisceau incident est donc défléchi vers l'adresse désirée, et lu sur une matrice de photodétecteurs. On établit ainsi la liaison optique entre deux abonnés. L'intérêt essentiel du dispositif tient à la possibilité de "croiser" dans l'espace tous les faisceaux lumineux se propageant indépendamment entre tous les points des matrices d'entrée 1 et de sortie 4.

L'inscription des strates qui permettent d'assurer la commutation entre deux abonnés quelconques est réalisée à l'aide de deux faisceaux issus par exemple d'un laser Hélium-Cadmium (He-Cd).

A titre d'exemple non limitatif, on peut considérer que les circuits photoémetteurs et les circuits photorécepteurs sont réalisés par des extrémités de fibres optiques ; les microlentilles de la matrice 2 étant réalisées, par exemple, par des lentilles à gradient d'indice.

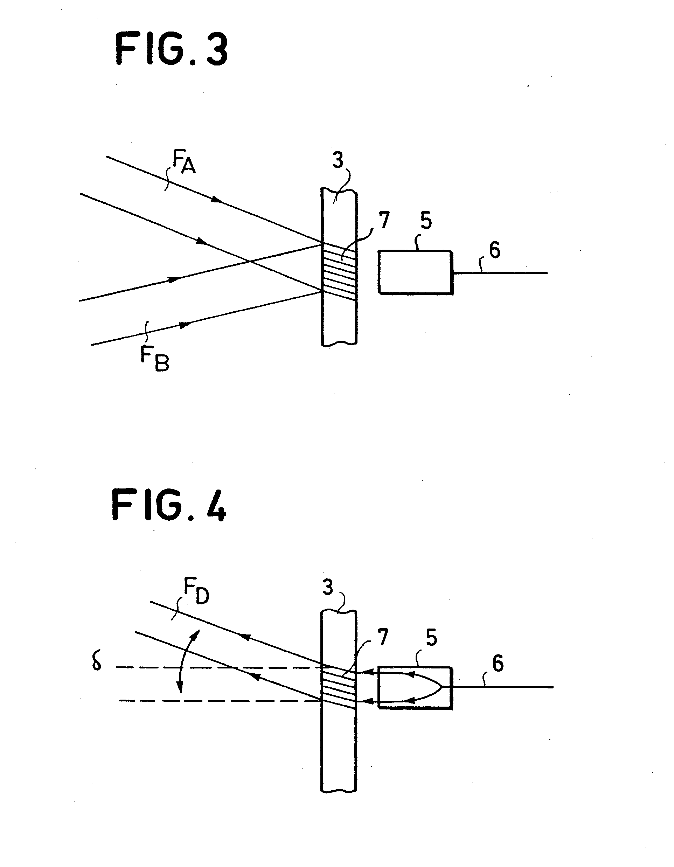

Le fonctionnement d'une cellule de commutation spatiale est illustré sur les figures 3 et 4 ; la figure 3 représentant l'inscription et la figure 4 la lecture des réseaux de commutation. La déflexion angulaire du faisceau issu de la fibre optique 6 est obtenue par un réseau de strates enregistré dans un matériau photosensible épais 3, inscriptible et effaçable. Les réseaux inscrits avec des pas variables, assurent donc une déviation angulaire $\delta = \dfrac{\lambda \ell}{p}$ ; $\lambda \ell$ étant la longueur d'onde de lecture et p le pas du réseau photoinduit. Le réseau est enregistré et effacé avec une longueur d'onde correspondant au domaine de sensibilité spectrale du matériau utilisé ; pour les cristaux BSO on a : $\lambda_i \simeq 450 - 550$ nm. Le faisceau de lecture, étant peu absorbé, n'affecte pas la modulation d'indice photoinduite ; la lecture étant non destructive. Le pas et l'orientation des strates du réseau déterminent donc la direction du faisceau défléchi vers un abonné particulier. Le réseau étant enregistré dans un milieu photosensible épais, l'indice des faisceaux d'inscription FA et FB doit être calculée pour que l'onde de lecture diffracte dans les conditions de Bragg en FD. L'une des difficultés importantes liée à l'utilisation d'une telle cellule de déflexion tient d'ailleurs à la précision angulaire d'adressage requise sur les faisceaux FA et FB servant à l'enregistrement.

Le dispositif de commutation de faisceaux optiques selon l'invention, dont le fonctionnement général vient d'être exposé, est réalisé à l'aide d'une structure optique simple permettant la commutation spatiale à partir, par exemple, d'un réseau ordonné de fibres. Le matériau photosensible support du réseau holographique, par exemple, un monocristal de BSO, qui est un matériau photoréfractif à variation d'indice photoinduite, fonctionnant dans la configuration électro-optique transverse.

Ainsi l'invention concerne un dispositif de commutation spatiale de faisceaux lumineux issus par exemple de fibres optiques monomodes ou multimodes. Le dispositif présenté permet de relier toute fibre d'une matrice émettrice à l'un quelconques des éléments d'une matrice réceptrice constituée par un arrangement de $N^2$ photodétecteurs ou extrémités des fibres optiques. Le dispositif de l'art antérieur, cité précédemment, permet de réaliser un tel objectif mais d'une façon assez complexe, car il nécessite de déterminer par calcul la position des deux sources d'enregistrement $S_n$ et $S_{n+1}$. Ces deux sources, en effet, doivent générer les deux ondes qui interfèrent et créent dans le volume du matériau photosensible un système de strates d'interférence tel que le faisceau issu de fibres optiques émettrices soit diffracté sous incidence Bragg. Ces sources peuvent être, par exemple, générées par la déflexion de faisceaux incidents issus d'une même source après traversée d'un séparateur de faisceau, à l'aide d'un dispositif par exemple optomécanique.

Par contre le dispositif de l'invention ne nécessite aucun faisceau mobile et le faisceau diffracté est restitué rigoureusement dans la direction des ondes ayant servies à l'inscription. Les directions de diffraction sont prédéterminées par la géométrie d'un réseau d'obturateurs. La commutation spatiales est obtenue par simple sélection de tensions $V_x$ et $V_y$ appliquées sur deux obturateurs.

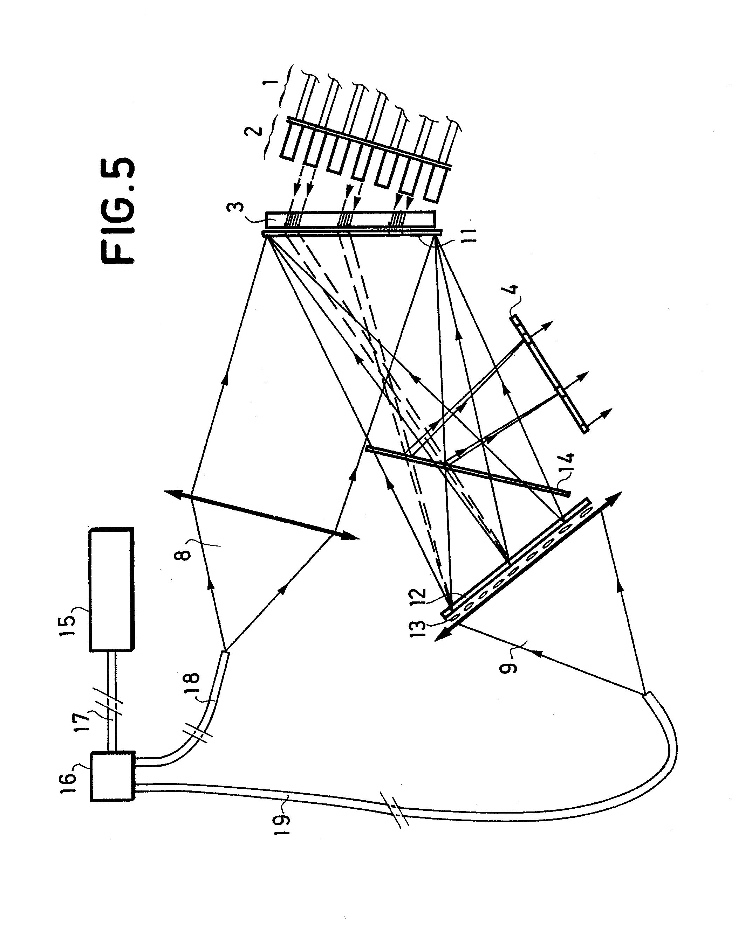

Selon le schéma de la figure 5 le dispositif de l'invention utilise principalement :

- Un réseau de fibres optiques émettrices 1 collimatées par un réseau de lentilles 2.

- Un plan de commutation constitué par un matériau photosensible épais 3 permettant l'inscription en volume de réseaux holographiques de pas variable.

L'inscription et l'effacement du réseau sont effectués dans le domaine visible (typiquement $\lambda \simeq 0,5$ /um) par variation d'indice photoinduite (effet photoréfractif). Ces réseaux servant à la commutation ont la propriété d'être peu effacés aux longueurs d'ondes de lecture issues des fibres émettrices ( $\lambda \simeq 0,85$ /um).

- Une matrice réceptrice 4 constituée par un réseau ordonnée de $N^2$

photodétecteurs ou extrémités de fibres optiques à grande ouverture numérique.

- Des faisceaux cohérents 8 et 9 successivement de longueur d'onde $\lambda_1$ et $\lambda_2$ servant au marquage du réseau holographique de pas donné.

- Deux réseaux d'obturations 11 et 12 permettant chacun sous l'action de tensions appliquées $V_x$ et $V_y$ de générer l'ouverture d'une fenêtre de coordonnée X-Y transparente aux longueurs d'ondes $\lambda_1$ et $\lambda_2$. Ces obturateurs sont disposés selon le schéma de la figure 5. L'obturateur 11 placé contre le plan de commutation est ouvert ou fermé selon la tension appliqué mais reste transparent à la longueur d'onde de lecture $\lambda_\ell$ .

- Un réseau de lentilles 13 (ou diffuseur) permettant l'éclairage de tous les points du plan de commutation. En d'autres termes chaque fenêtre ouverte sur l'obturateur 12 de coordonnée x,y éclaire l'ensemble du plan de commutation.

Le marquage du réseau holographique dans le matériau 3 est assuré par diffusion Bragg colinéaire cette méthode d'inscription est utilisée dans ce dispositif pour assurer une direction du faisceau diffracté rigoureusement colinéaire aux faisceaux servant l'inscription.

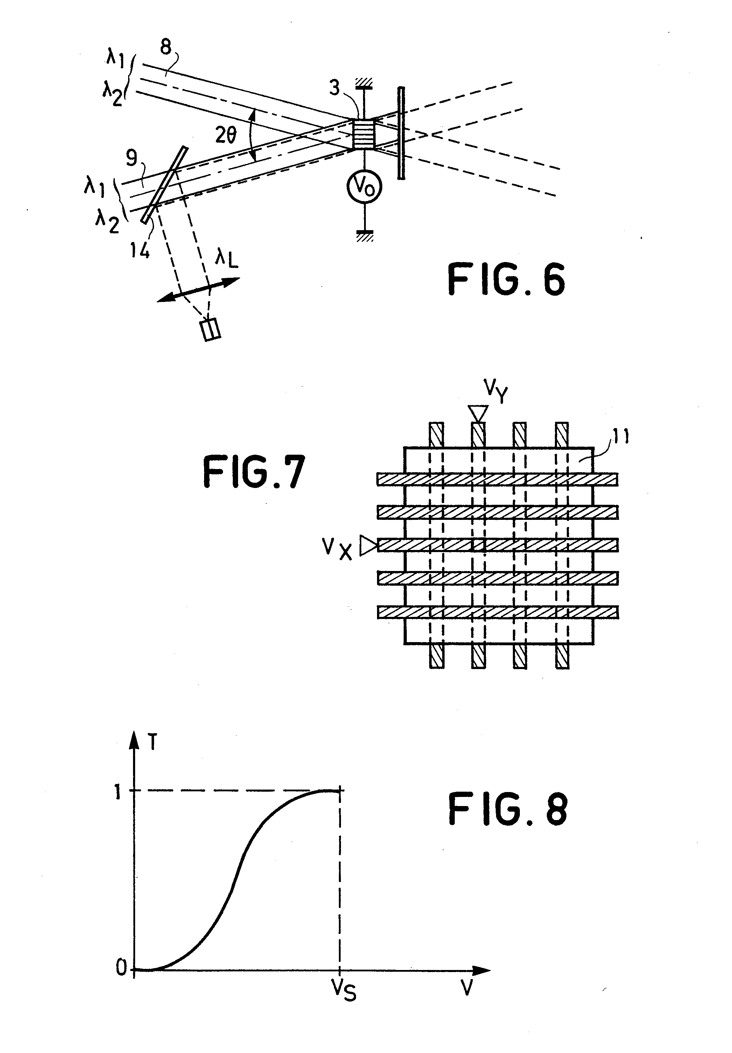

Le cristal photoréfractif (par exemple en oxyde de bismuth-silicium BSO) est éclairé par la figure d'interférences due respectivement aux faisceaux de longueur d'onde $\lambda_1$ et $\lambda_2$ comme représenté à la figure 6.

Pour l'ensemble de la description qui va suivre et pour les figures considérées on se place à l'intérieur du milieu 3. C'est à dire que l'on peut écrire $\frac{2\pi n}{\lambda} = K$ où n est l'indice du milieu à la longueur d'onde $\lambda$ et K le vecteur d'onde du rayonnement considéré.

Sur la figure 6, on considère deux faisceaux 8 et 9 de vecteurs d'ondes $K_o$ et $K_r$. Les franges d'interférence résultant de la superposition de ces deux faisceaux de même longueur d'onde sont enregistrés dans le milieu 3. Ce milieu, à titre d'exemple non limitatif, est constitué d'un matériau photoréfractif polarisé par un champ électrique obtenu au moyen d'une source de tension $V_o$. Son orientation est telle que le champ électrique produit un effet de variation d'indice par des porteurs de charge créés par photoexcitation. Les variations spatiales d'intensité lumineuse se traduisent instantanément dans ce milieu par des variations spatiales d'indice de réfraction, les plans d'interférence étant, de préférence, quasi perpendiculaires à la direction du champ appliqué.

Il y a donc création d'un réseau de strates de vecteur d'onde spatial $\vec{K}$ : $/\vec{K}/ = \frac{2\pi}{\Lambda}$ avec $\Lambda$ égal au pas des strates phototoinduites. Il est connu que les trois vecteurs ainsi définis sont liés par la relation vectorielle:
$$\vec{K} = \vec{K}_r - \vec{K}_o.$$

Lors de la lecture par le faisceau de lecture de vecteur d'onde $\vec{K}_\ell$, pour obtenir un rendement optimum de la diffraction, il convient de respecter la condition de Bragg qui définit, pour chaque système d'interférence, l'angle $\theta$ entre le faisceau parallèle de lecture et les plans de diffraction. On obtient alors une onde diffractée de vecteur d'onde $\vec{K}_d$. Ces différents vecteurs sont liés entre eux par la relation : $\vec{K}_d = \vec{K}_\ell - \vec{K}.$

Ces relations vectorielles permettent de calculer l'incidence Bragg du faisceau de lecture si la longueur d'onde de celui ci $\lambda\ell$ est différente de celle utilisée pour l'inscription du réseau.

Le procédé selon l'invention assure une relecture, dans les conditions de Bragg par une onde de lecture de longueur d'onde $\lambda\ell$ différente de la longueur d'onde du faisceau référence, prise en dehors du domaine de sensibilité spectrale des cristaux BSO par exemple.

Cette relecture est possible en volume, car on adopte, lors de deux enregistrements successifs à deux longueurs d'ondes $\lambda_1$ et $\lambda_2$, les mêmes conditions d'éclairement de l'objet. Ainsi les rayonnements qui interfèrent dans le milieu donnent aux strates des orientations identiques mais des espacements qui varient en fonction de ces deux longueurs d'ondes $\lambda_1$ et $\lambda_2$ utilisées. Sur la figure 6 on a représenté une source 15 qui délivre successivement deux faisceaux de longueur d'onde $\lambda_1$ puis deux faisceaux de longueur d'onde $\lambda_2$ ; ces deux faisceaux étant obtenus grâce au séparateur de faisceaux 16. Sur cette figure 6 on a considéré à titre d'exemple des fibres 17, 18, 19 permettant de véhiculer ces deux faisceaux 8 et 9 à partir de la source 15.

A la longueur d'onde $\lambda_1$ on a :
$$I_1 = 1 + \text{Cos } K_1 x$$

avec $K_1 = \frac{2\pi}{\Lambda_1}$ ; $\Lambda_1 = \frac{\lambda_1}{2 \sin\theta}$

à la longueur d'onde $\lambda_2$ on a :

$I_2 = 1 + \cos K_2 x$

avec $K_2 = \frac{2\pi}{\Lambda_2}$ ; $\Lambda_2 = \frac{\lambda_2}{2 \sin\theta}$

$2\theta$ est l'angle entre les deux faisceaux ; $\Lambda_1$ , $\Lambda_2$ le pas de la structure périodique aux longueurs d'onde $\lambda_1$ et $\lambda_2$. En tenant compte des non linéarités du champ de charge d'espace photoinduit la variation d'indice $\Delta n$ s'écrit, en fonction de l'intensité incidente $I_1$ :

$$\Delta n = \sum_{n=1}^{\infty} \gamma_n I_1^m$$

Lorsque le cristal est éclairé par la figure d'interférence $I_1 + I_2$ on obtient l'expression suivante de $\Delta n$ :

$$\Delta n = \sum_{n=1}^{\infty} \gamma_n (I_1 + I_2)^n$$

ou son expression équivalente de la forme :

$$n = \sum_{n,m=1}^{\infty} (\alpha_{m,n} I_1^m \times I_2^n)$$

Les non linéarités de la variation d'indice photoconduite génèrent donc de nombreux vecteurs $\vec{K}_{NL}$ tels que :

$$\vec{K}_{NL} = m\vec{K}_1 \pm n\vec{K}_2$$

Ces vecteurs $K_{NL}$ assurent une diffraction Bragg dans une direction colinéaire à celle des faisceaux d'enregistrement pour une longueur d'onde $\lambda_\ell$ telle que :

$$\frac{1}{\lambda_\ell} = \frac{m}{\lambda_1} \pm \frac{n}{\lambda_2}$$

A titre d'exemple on peut réaliser la diffraction Bragg colinéaire avec les conditions suivantes :

$\lambda_1$ = 633 mm (Laser Helium-Néon)

$\lambda_2$ = 514 nm (Argon)

En considérant les non linéarités m = 2 et n = 1 on obtient une lecture dans les conditions d'incidence de Bragg par la longueur d'onde $\lambda_\ell$ = 820 nm, longueur d'onde voisine de celle du laser semiconducteur utilisé ($\lambda_\ell$ = 850nm). On peut donc assurer la diffraction du faisceau dans une direction qui est celle du faisceau incident, le pas du réseau étant modifié par l'intermédiaire d'une modification de l'angle $\theta$.

La mise en communication de la fibre émettrice de coordonnée $X_i Y_j$ avec le récepteur de coordonnance $X_k Y_\ell$ est obtenue de la façon suivante :

- ouverture sur l'obturateur 11 de la fenêtre $X_i Y_y$.

- ouverture sur l'obturateur 12 de la fenêtre $X_k Y_\ell$ .

- inscription du réseau photoinduit successivement à deux longueurs d'ondes $\lambda_1$ et $\lambda_2$ au point de coordonnée $X_i Y_j$.

La diffraction Bragg colinéaire assure, alors, un seul ordre de diffraction dans une direction qui est donnée par le faisceau lumineux élémentaire passant par les points $(X_i Y_j) - (X_k Y_\ell )$

-Le séparateur dichroïque 14 assure la réflexion de l'onde diffractée en direction de la matrice de récepteurs.

- La lecture à la longueur d'onde $\lambda_\ell$ = 850 nm efface peu l'amplitude du réseau photoinduit pour un temps de lecture.

$\tau \simeq$ 10 à 20 heures pour une intensité I = 50 $\mu$ W cm$^{-2}$.

On peut effacer le réseau photoconduit au point $X_i Y_j$ en réalisant l'ouverture du seul obturateur $X_i Y_j$. Il y a effacement par éclairage uniforme à la longueur d'onde $\lambda_1$ et/ou $\lambda_2$ ; on peut alors établir une autre communication.

Toute autre communication peut être établie par sélection convenable des tensions de commandes sur les obturateurs 11 et 12, l'obturateur 11 isolant le plan de commutation de l'éclairage incident dû aux longueurs d'ondes $\lambda_1$ et $\lambda_2$, une fibre émettrice peut aussi être reliée à n récepteurs. Cette fonction est obtenue par ouverture simultanée de n fenêtres sur l'obturateur 12 pendant la phase d'enregistrement.

Le réseau de lentilles 2 peut être par exemple un réseau de 32 x 32 lentilles. Ces lentilles peuvent être des lentilles du type à gradient d'indice ou optique moulée. Elles sont utilisées pour l'éclairage du plan de commutation et pour collimater les faisceaux issus des fibres émettrices.

La source 15 peut être réalisée à l'aide de lasers continus Argon ou Krypton avec lesquels on peut obtenir deux longueurs d'onde différentes, ou de laser à colorant avec un filtre spatial dans la cavité, ou même avec deux lasers indépendants pour obtenir les deux longueurs d'ondes désirées émettant dans le domaine de longueur d'onde compatible avec la diffraction. Cette source est couplée à des fibres monomodes 18 et 19 par l'intermédiaire d'un séparateur 16 de faisceau pour générer les faisceaux 8 et 9.

La lame dichroïque 14 est telle que l'on aie une réflexion maximum à la longueur d'onde $\lambda_\ell$ et transmission maximum aux longueurs d'onde $\lambda_1$ et $\lambda_2$.

Les réseaux d'obturation 11 et 12 à accès X-Y peuvent être des réseaux de 32 x 32 fenêtres dont l'ouverture est commandable sous l'action d'une tension X-Y : $V_S$, comme représenté à la figure 7 avec $V_X = \dfrac{V_S}{2}$ et $V_Y = -\dfrac{V_S}{2}$. Un premier ensemble d'électrodes parallèles étant disposé sur l'une des faces du cristal détermine avec un deuxième ensemble d'électrodes déposé sur l'autre face du cristal, un ensemble de points de croisement qui peuvent être adressés individuellement selon un adressage matriciel. Ces électrodes sont transparentes. Elles peuvent être réalisées, par exemple, avec un oxyde mixte d'indium et d'étain.

Ces électrodes sont soumises à un potentiel variable V tel que pour V = O la polarisation incidente est tournée à 90°. Pour $V > V_{seuil}$ la polarisation incidente reste inchangée.

Un polarisateur d'axe orthogonal à la polarisation incidente est placé sur la face de sortie du cristal liquide. Il est choisi pour faire fonction de polariseur à $\lambda \simeq 500$ nm mais possède un faible taux de polarisation à 750 nm. Ainsi le modulateur a une transmission maximum pour $\lambda \simeq 750$ nm.

La sélection d'une ouverture de coordonnée (X,Y) se fait en appliquant les tensions V comme indiqué à la figure 7.

La courbe représentée à la figure 8 représente la transmission de l'obturateur au point X,Y en fonction de la tension V appliquée en ce point. Il peut être réalisé au moyen d'une cellule d'affichage à cristaux liquides (modes twisté ou biréfringent). La transparence de la cellule à $\lambda > 850$ nm est obtenue par utilisation de polariseurs possèdant un faible pouvoir polarisant pour $\lambda > 750$ nm. Tout autre dispositif d'affichage ou de composition d'image par adressage X-Y peut être utilisé en particulier pour la réalisation de l'obturateur 12 (électrochromes, liquide smectique...) Selon la technologie retenue, un temps de commutation de l'ordre de 10 à 100 millisecondes est réalisable.

Le réseau obturateur doit être transparent à la longueur d'onde $\lambda_\ell = 850$ nm par exemple en utilisant des polariseurs possèdant un taux de polarisation faible pour $\lambda > 750$ nm.

Le matériau photosensible pour l'inscription dynamique d'hologramme de phase par effet photoréfractif sur cristal électro-optique peut être du type oxyde de bismuth-silicium (BSO), oxyde de bismuth-germanium (BGO) ou titanate de baryum (Ba Ti O$_3$)....

Ce dispositif peut fonctionner sous champ appliqué ($E_o \neq$ o) ou par "diffusion" des photodétecteurs à champ nul ($E_o = O$)

On peut considérer par exemple :

- la surface sensible : 100 x 100 mm$^2$

- l'épaisseur du cristal : 3 mm

- la surface du réseau : 3 x 3 mm$^2$

- le nombre de réseaux : 32 x 32

- la distance plan de commutation matrice de détection :

D $\simeq$ 50 cm.

On a alors une diffraction Bragg colinéaire avec par exemple :

$\lambda_1 = 633$ nm

$\lambda_2 = 514$ nm

$$\frac{1}{\lambda_\ell} = \frac{2}{633} - \frac{1}{514} \simeq \frac{1}{822}$$

On obtient aux efficacités de diffraction $\eta = 10^{-3}$, une densité de puissance incidente : $P_i \simeq 10$ à $100$ m W cm, une constante de temps d'inscription du réseau photoinduit : $\tau \simeq 10$ à 100 ms.

13

Ainsi le dispositif de l'invention présente les avantages suivants :

- Aucun faisceau n'est mobile

- Le faisceau diffracté est restitué rigoureusement dans la direction des ondes ayant servies à l'inscription.

- Les directions de diffraction sont prédéterminées par la géométrie du réseau d'obturateur 12.

- La commutation spatiale est obtenue par simple sélection des tensions $V_X$ et $V_Y$ appliquées sur les obturateurs 11 et 12 (cristaux liquides avec $V_X$ ; $V_Y < 10$ Volts).

- L'ensemble constitue une structure compacte utilisant un minimum de composants optiques.

L'ensemble de ces propriétés apporte des avantages intéressants pour la conception d'un système de commutation spatiale de capacité élevée (de 1024 x 1024 à $10^4$ x $10^4$). Ce dispositif se caractérise par l'absence de déplacement des faisceaux d'adressage ; les configurations de l'art antérieur nécessitant un repositionnement des faisceaux avec une précision de l'ordre de 1 minute d'angle.

Le dispositif de l'invention peut être utilisé dans un central téléphonique automatique.

14

## REVENDICATIONS

1. Dispositif de commutation de faisceaux optiques destiné à relier par voie optique au moins l'un des circuits d'un ensemble de circuits photoémetteurs (1) à au moins un circuit d'un ensemble de circuits photorécepteurs (4), comprenant des moyens de génération de deux faisceaux lumineux d'inscription, des moyens de collimation (2) et des moyens de déflexion des faisceaux émis par les circuits photoémetteurs rendus préalablement parallèles par ces moyens de collimation (2), un premier modulateur spatial bidimentionnel étant positionné sur le parcours de ces faisceaux d'inscription entre les moyens de génération de ces faisceaux et ces moyens de déflexion, ces moyens de déflexion consistant en un réseau de diffraction inscrit dans un milieu photosensible (3), ce réseau étant obtenu par l'interférence de ces deux faisceaux lumineux d'inscription de longueur d'onde différente de celle des faisceaux issus des circuits photoémetteurs (1), la longueur d'onde des faisceaux émis par les circuits photoémetteurs (1) n'étant pas située dans le domaine de sensibilité spectrale du milieu photosensible (3), les deux faisceaux lumineux d'inscription étant des faisceaux d'onde plane éclairant, tous deux, uniformément ce milieu photosensible (3), caractérisé en ce que, les moyens de génération des faisceaux d'inscription délivrent des faisceaux d'inscription à deux longueurs d'onde ($\lambda_1$, $\lambda_2$) et en ce qu'il comprend, conformément à une séquence préétablie, des moyens de commutation (16) permettant d'émettre dans deux directions, qui restent les mêmes, les deux faisceaux d'inscription de manière à ce que ces faisceaux créent un premier réseau de diffraction dans ce milieu photosensible (3) à une première longueur d'onde $\lambda_1$ et un second réseau de diffraction dans ce milieu photosensible (3) à une deuxième longueur d'onde $\lambda_2$, la longueur d'onde $\lambda_\ell$ des faisceaux issus des circuits photoémetteurs (1) étant une combinaison de ces deux longueurs d'onde ($\lambda_1$, $\lambda_2$) et telle que $\frac{1}{\lambda_\ell} = \frac{m}{\lambda_1} \pm \frac{n}{\lambda_2}$ , m et n étant deux nombres entiers, un deuxième modulateur bidimensionnel (12) positionné sur le parcours d'un des faisceaux lumineux d'inscription avant le premier modulateur (11), une lame semi-transparente dichroïque (14) transparente aux longueurs d'ondes des faisceaux d'inscription ($\lambda_1$, $\lambda_2$) intercep-

tant tous les faisceaux issus de circuits photoémetteurs réfléchissante pour la longueur d'onde $(\lambda_{\varrho})$ de ces faisceaux issus des circuits photoémetteurs étant disposée entre ces deux modulateurs,·cette lame (14) réfléchissant ainsi les faisceaux issus des circuits photoémetteurs vers les circuits photorécepteurs.

2. Dispositif selon la revendication 1, caractérisé en ce que les moyens de génération des faisceaux d'inscriptions comportent un seul laser (15) émettant sur deux longueurs d'ondes distinctes.

3. Dispositif selon la revendication 2, caractérisé en ce que le laser (15) est un laser argon.

4. Dispositif selon la revendication 2, caractérisé en ce que ce laser (15) est un laser krypton.

5. Dispositif selon la revendication 1, caractérisé en ce que ce laser (15) est un laser à colorant comportant une cavité dans lequel un filtre spatial est inséré.

6. Dispositif selon la revendication 1, caractérisé en ce que les modulateurs spatiaux bidimensionnels (11,12) sont formés d'une lame de cristal liquide insérée entre deux séries d'électrodes transparentes déposées sur chaque face de la lame, les électrodes de chacune de ces faces étant parallèles entre elles, et de direction perpendiculaire avec la direction des électrodes de l'autre face.

7. Dispositif selon la revendication 6, caractérisé en ce que le cristal est un cristal nématique en hélice, un polarisateur étant disposé sur l'une de ses faces, cette face étant la face de sortie pour les faisceaux d'inscription.

8. Dispositif selon la revendication 1, caractérisée en ce que les circuits photoémetteurs (1) sont disposés selon une matrice.

9. Dispositif selon la revendication 1, caractérisé en ce que les moyens de collimation (2) sont des lentilles disposées en matrice.

10. Dispositif selon la revendication 9, caractérisée en ce que les lentilles sont des lentilles à gradient d'indice.

11. Dispositif selon la revendication 1, caractérisé en ce que les circuits photoémetteurs (1) sont des extrémités de fibres optiques.

12. Dispositif selon la revendication 1, caractérisé en ce que les circuits photorécepteurs (4) sont des extrémités de fibres optiques.

13. Dispositif selon la revendication 1, caractérisé en ce que le milieu photosensible (3) est une lame monocristalline d'oxyde de bismuth-silicium.

# FIG.1

# FIG. 2

# FIG. 3

$F_A$

3

7

5

6

$F_B$

# FIG. 4

$F_D$

3

7

5

6

$\delta$

# FIG.5

**FIG. 6**

**FIG. 7**

**FIG. 8**

Office européen
des brevets

0122192

Numéro de la demande

**RAPPORT DE RECHERCHE EUROPEENNE**

EP 84 40 0659

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | EP-A-0 069 652 (THOMSON-CSF)<br><br>* Page 2, lignes 9-19; page 5, ligne 9 - page 7, ligne 19 *<br><br>--- | 1,2,4, 5,13 | H 04 Q 3/52<br>H 04 B 9/00<br>G 03 H 1/24 |
| A | EP-A-0 053 957 (THOMSON-CSF)<br>* Page 1, ligne 20 - page 2, ligne 10; page 9, ligne 17 - page 10, ligne 16 *<br><br>--- | 1,8-13 | |
| A | FR-A-2 243 573 (TREHEUX)<br>* Page 2, ligne 13 - page 4, ligne 19; figures 4,5 *<br><br>--- | 1 | |
| A | FR-A-2 171 241 (PHILIPS)<br>* Page 9, ligne 22 - page 11, ligne 10 *<br><br>--- | 1 | |
| D,P<br>A | EP-A-0 083 520 (THOMSON)<br>(13-07-1983)<br>* Page 2, ligne 6 - page 3, ligne 5; page 6, ligne 10 - page 9, ligne 14 *<br><br>----- | 1,3,6, 7 | |

DOMAINES TECHNIQUES RECHERCHES (Int. Cl. 3)

H 04 Q
G 03 H

Le présent rapport de recherche a été établi pour toutes les revendications

| Lieu de la recherche | Date d'achèvement de la recherche | Examinateur |
|---|---|---|
| LA HAYE | 26-06-1984 | VANDEVENNE M.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82